# EUROPEAN PATENT APPLICATION

(11) **EP 1 209 131 A2**
(43) Date of publication of application: **29.05.2002**
(21) Application number: 02075440.4
(22) Date of filing: 27.09.1999
(51) Int. Cl.: C03B 37/08, C03B 7/02

(54) **Fiber forming apparatus having a forehearth with two or more columns of openings**

(30) Priority: 19.10.1998 US 175025
(62) Divisional of application: 99949885.0
(71) Applicant: OWENS CORNING, Toledo, Ohio 43659 (US)
(72) Inventor: Wingert, John W, Granville, Ohio 43023 (US); O'Brien-Bernini, Frank C, Granville, Ohio 43023 (US)
(74) Representative: West, Alan Harry

(57) **Abstract**

An apparatus (10) is provided for supplying molten glass material in primary streams to one or more bushings (50). The apparatus (10) comprises a melter (20), delivery equipment (30), and a forehearth (40). The melter (20) provides a main stream of molten glass material. The delivery equipment (30) receives the main stream of molten glass material from the melter (20) and transports the stream to a receiving station. The forehearth (40) defines the receiving station and comprises a receptacle (42) having a length, a width and a height. The receptacle (42) includes two or more columns (46a,46b) of openings (44a,44b) spaced a given distance from one another along the width of the receptacle. Each column (46a,46b) includes at least two openings (44a,44b) through which molten material passes from the receptacle (42) to the bushings (50). A single drawing device (80) positioned below the openings (44a,44b) draws secondary streams of molten glass from the bushings (50) into continuous fibers (70).

## Description

This invention relates generally to apparatuses for forming glass fibers and, more particularly, to such an apparatus having a forehearth provided with two or more columns of openings located side-by-side along the length of the forehearth and through which streams of molten glass pass.

Apparatuses used to form glass fibers are known in the art. Typically, such an apparatus comprises a melter, a forehearth and a channel interconnecting the forehearth with the melter. One or more bushings or spinners are positioned below the forehearth. Molten glass material travels from the melter to the forehearth via the channel. The glass material then flows through openings in the forehearth to the bushings or the spinners therebelow. The bushings have a plurality of nozzles or tips, typically 1000 or more, through which streams of glass flow. Winders or other pulling devices are provided below the bushings for attenuating the streams into continuous glass fibers. Each spinner comprises a rotating centrifuge. The molten glass flows across the bottom wall of the spinner to the spinner peripheral wall and passes in a molten state through orifices in the spinner peripheral wall to create primary fibers. Thereafter, the primary fibers are further attenuated into a veil of secondary fibers of smaller diameter by downwardly flowing hot gases.

Typically, forehearths include a single line of openings extending centrally along their length. Streams of molten glass material pass through the forehearth openings to the bushings or spinners positioned therebelow. Forehearths and channels add significant expense to the glass fiber forming process. Such structures require plant floor space, are constructed from costly refractory materials, and must be heated to maintain the glass material molten.

There is a need for improved apparatus for forming glass fibers such that floor space, material and energy requirements are minimized.

This need is met by the present invention wherein improved apparatuses are provided for forming glass fibers. The apparatuses include at least one forehearth provided with two or more columns of openings located side-by-side along the length of the forehearth. Molten glass material passes through the openings to bushings or spinners positioned below the forehearth. The apparatuses of the present invention result in lower glass fiber manufacturing costs due to, inter alia, increased output from each forehearth and a reduction in required plant floor space, refractory costs and operating energy costs. The present invention is also advantageous as it provides for increased flexibility of options for bushing and/or spinner design configurations for increased operational efficiency.

Smaller-than-normal bushings are not typically used with a forehearth having a single line of openings as the output from those bushings is too low. The present invention allows a greater number (i.e., a higher density) of smaller-than-normal bushings to be positioned beneath a forehearth. Accordingly, use of such bushings becomes practical when used with a forehearth constructed in accordance with the present invention. Smaller-than-normal bushings are advantageous for the reasons set out in copending patent application U.S. Serial No. 08/712,744, entitled PROCESS AND APPARATUS FOR PRODUCING STREAMS OF MOLTEN GLASS by Wingert et al., the disclosure of which is incorporated herein by reference.

In accordance with a first aspect of the present invention, a forehearth is provided comprising a receptacle having a length, a width and a height. The receptacle includes two or more columns of openings spaced a given distance from one another along the width of the receptacle. Each column includes at least two openings.

The openings may comprise a plurality of first and second openings and the columns may comprise first and second columns positioned along first and second longitudinal axes. The first openings are located in the first column and the second openings are located in the second column. The first column may be substantially parallel to the second column. The openings are also located in rows which extend generally transversely to the columns.

In a first embodiment, a first opening shares a common axis with a second opening such that the two openings are located in a single row. The axis extends generally transversely to the first and second longitudinal axes. A pair of bushings may be provided below the two openings. The bushings also extend along a common axis, which extends generally transversely to the first and second longitudinal axes. As the two bushings are located along a common axis, a single winder device may be provided for attenuating streams of molten glass material flowing from the two bushings into continuous glass fibers. The winder may have a single collet or mandrel on which a pair of thin-walled tubes or sleeves are provided such that multiple glass fiber packages are formed simultaneously.

In accordance with a second aspect of the present invention, an apparatus is provided for supplying streams of molten glass to be drawn into continuous glass fibers. The apparatus comprises a melter, delivery equipment and a forehearth. The melter provides a main stream of molten glass material. The delivery equipment receives the main stream of molten glass material from the melter and transports the stream to a receiving station. The forehearth defines the receiving station. It is constructed in essentially the same manner as the forehearth described above with regard to the first aspect of the present invention. The apparatus also includes a plurality of bushings.

In accordance with a third aspect of the present invention, an apparatus is provided for forming glass fibers. The apparatus comprises a melter, delivery equipment and a forehearth. The melter provides a main stream of molten glass material. The delivery equipment receives the main stream of molten glass material from the melter and transports the stream to a receiving station. The forehearth defines the receiving station. The forehearth is constructed in essentially the same manner as the forehearth described above with regard to the first aspect of the present invention. The apparatus also includes a plurality of spinners.
Fig. 1 is a plan view, partially in cross section, of an apparatus constructed in accordance with a first embodiment of the present invention for supplying streams of molten glass to be drawn into continuous glass fibers and chopping units;
Fig. 2 is a view taken along view line 2-2 in Fig. 1;
Fig. 3 is a perspective view of the chopping units illustrated in Fig. 1;
Fig. 4 is a plan view, partially in cross section, of the apparatus of Fig. 1 in combination with a plurality of winding devices;
Fig. 5 is a view taken along view line 5-5 in Fig. 4;
Fig. 6 is a plan view, partially in cross section, of an apparatus constructed in accordance with a second embodiment of the present invention for supplying streams of molten glass to be drawn into continuous glass fibers and winding devices;
Fig. 7 is a plan view, partially in cross section, of an apparatus constructed in accordance with a third embodiment of the present invention for supplying streams of molten glass to be drawn into continuous glass fibers and winding devices;
Fig. 8 is a plan view, in cross section, illustrating an apparatus formed in accordance with a fourth embodiment of the present invention;
Fig. 9 is a plan view, in cross section, illustrating an apparatus formed in accordance with a fifth embodiment of the present invention;
Fig. 10 is a plan view, in cross section, illustrating an apparatus formed in accordance with a sixth embodiment of the present invention; and
Fig. 11 is a plan view, in cross section, illustrating an apparatus formed in accordance with a seventh embodiment of the present invention.

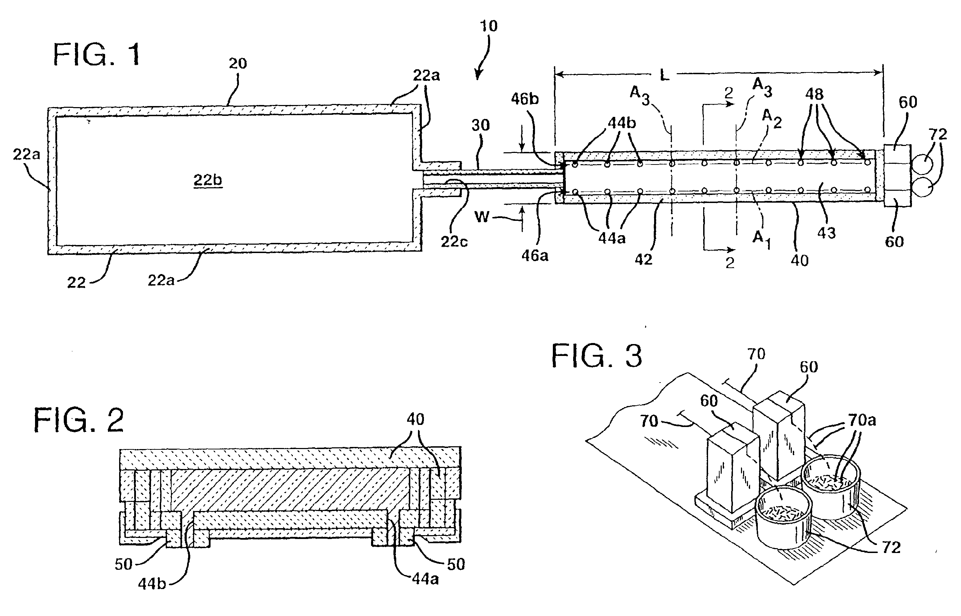

An apparatus 10 constructed in accordance with the present invention for supplying streams of molten glass to be drawn into continuous glass fibers is illustrated in Figs. 1 and 2. The apparatus 10 comprises a melter 20, delivery equipment 30, a forehearth 40 and a plurality of bushings 50 positioned below the forehearth 40. In the Fig. 1 embodiment, the apparatus 10 is used in conjunction with a pair of conventional chopping units 60. The units 60 are positioned below the bushings 50 and function as drawing devices for attenuating the glass streams (not shown) into continuous glass fibers 70. The chopping units 60 also serve to chop the continuous glass fibers 70 into discrete sections 70a which are collected in bins 72.

The melter 20 comprises a melting receptacle 22 having side walls 22a, a bottom 22b and an upper portion or crown (not shown). It further includes a plurality of heating devices (not shown), such as conventional gas-fired burners. The receptacle 22 is formed of conventional refractory materials which are retained in position by appropriate supporting metal framework and foundations (not shown).

The receptacle 22 receives glass-forming batch materials from one or more batch feeding devices (not shown). The batch materials are reduced to a molten condition in the melter 20. A main stream of molten glass material exits the melter 20 through an opening 22c in one of the melter side walls 22a, see Fig. 1. The delivery equipment 30 receives the main stream of molten glass material from the melter 20 and transports the stream to a receiving station, which is defined by the forehearth 40. The delivery equipment 30 is formed from conventional refractory materials.

The forehearth 40 comprises a receptacle 42 having a length L, a width W and a height. The receptacle 42 includes a bottom portion 43 having a plurality of first and second openings 44a and 44b extending through it. The first and second openings 44a and 44b define first and second columns 46a and 46b. In the illustrated embodiment, the first column 46a includes ten first openings 44a and the second column 46b includes ten second openings 44b. The first column 46a extends along a first longitudinal axis A₁ while the second column 46b extends along a second longitudinal axis A₂. The longitudinal axes A₁ and A₂ and, hence, the columns 46a and 46b, are spaced a given distance from one another along the width W of the receptacle 42. The receptacle 42 is formed from conventional refractory materials.

Each first opening 44a shares a common axis A₃ with a second opening 44b such that pairs of the first and second openings 44a and 44b define a plurality of transverse rows 48 of openings 44a and 44b. The axes A₃ extend generally transversely to the first and second longitudinal axes A₁ and A₂. While each row 48 comprises only two forehearth openings in the illustrated embodiment, it is contemplated that each row 48 may include more than two openings, e.g., three to six openings. The number of columns of openings in the forehearth 40 will equal the number of openings in each row 48. Thus, if each row 48 includes four openings, there will be four columns of openings.

A separate bushing 50 is aligned with each of the first and second openings 44a and 44b, see Fig. 2. The bushings 50 are secured to the underside of the forehearth 40 in a conventional manner.

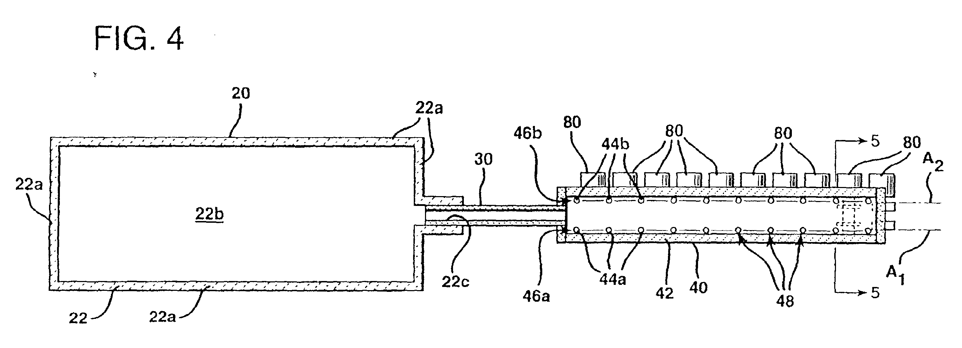

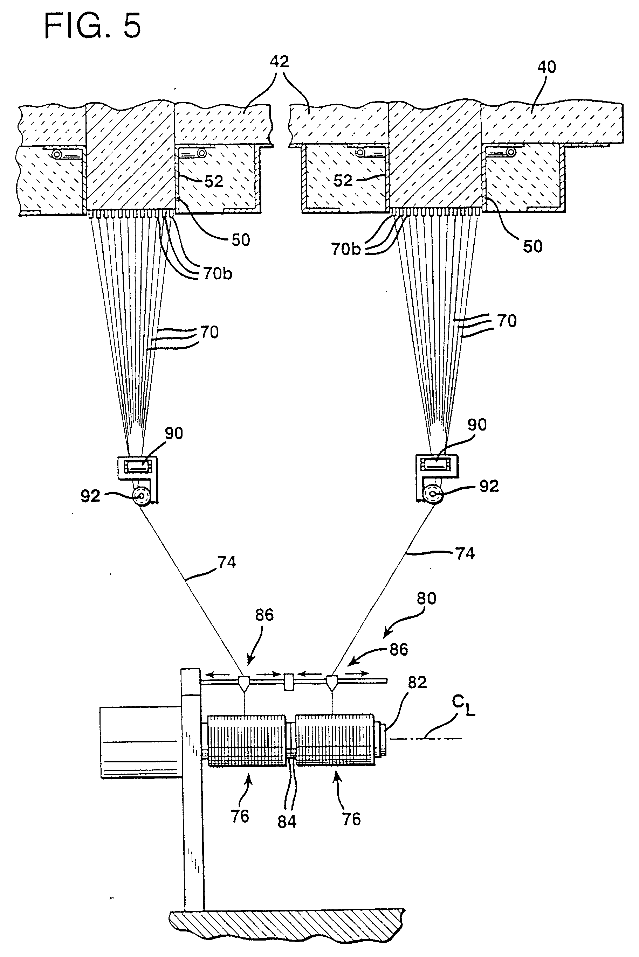

In Figs. 4 and 5, the apparatus 10 is combined with a plurality of winder devices 80. The devices 80 are positioned below the bushings 50 and function as drawing devices for attenuating the glass streams into continuous glass fibers 70. As noted above, the forehearth 40 includes pairs of first and second openings 44a and 44b which define transverse rows 48 of forehearth openings. Pairs of bushings 50 are aligned with the pairs of the first and second openings 44a and 44b and define rows 52 of bushing 50. The bushings 50 in each row 52 extend along a common axis which, in turn, extends generally transversely to the first and second longitudinal axes A₁ and A₂.

The glass fibers 70 formed from glass streams supplied by each bushing 50 pass over a conventional sizing applicator 90, see Fig. 5. From the sizing applicator 90, the sized fibers 70 are gathered together via a gathering shoe 92 to form a single strand 74.

In the embodiment illustrated in Figs. 4 and 5, a single winder device 80 is provided for each row 52 of bushings 50. For purposes of illustrating the locations of the winder devices 80, they are shown in Fig. 4 extending out beyond a side edge of the forehearth 40. Each winder device 80 comprises a rotatable member or collet 82. Two removable thin-walled tubes or sleeves 84 are provided on the collet 82. The winder device 80 also includes two traversing mechanisms 86. The mechanisms 86 distribute the two strands 74 of fibers 70 along the thin-walled tubes 84 so as to form a pair of glass fiber packages 76.

As noted above, each row 48 of forehearth openings may include two or more openings, The number of bushings 50 in each bushing row 52 will equal the number of forehearth openings in each row 48. Further, the number of thin-walled tubes 84 provided on the winder collet 82 and the number of traversing mechanisms 86 will equal the number of bushings 50 provided in the collet's corresponding bushing row 52.

One advantage of the present invention is the ability to use a single winder device 80 with a plurality of aligned bushings 50. As is apparent from Fig. 5, the longitudinal axis C_{L} of the collet 82 is generally parallel to the common axis along which the two bushings 50 are located. Because of the positioning of the two bushings 50 relative to the collet 82, the two glass strands 74 travel along substantially similar paths from the shoes 92 to the traversing mechanisms 86. Further, the two glass strands 74 experience similar stresses as the move along their paths of travel and are wound about the tubes 84. In contrast, if the bushings 50 are positioned along an axis which extends generally transversely to the length of the collet 82, the two glass strands 74 may travel along different paths as they move from the shoes 92 to the traversing mechanisms 86 and are wound about the tubes 84. Further. one strand 74 may experience stresses as it moves along its path of travel which are greater than those experienced by the other strand 74 making it much more likely that one or more glass fibers in the one strand may break or that a fiber package 76 may be formed having an unacceptable diameter, length, width, density and/or strand shape.

It is further contemplated that two or more strands 74 coming from two or more bushings 50 may be combined prior to winding and wound together on a single tube 84.

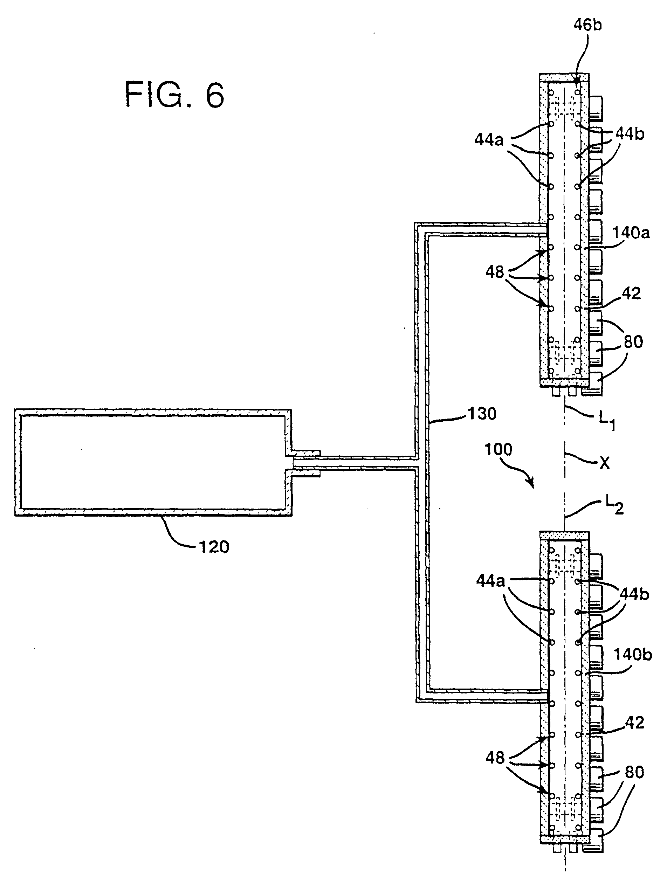

An apparatus 100 formed in accordance with a second embodiment of the present invention is shown in Fig. 6, wherein like reference numerals indicate like elements. In this embodiment, the apparatus 100 includes two forehearths 140a and 140b having longitudinal axes L₁ and L₂ which are aligned with one another so as to be positioned along a common axis X. Each of the two forehearths 140a and 140b is constructed in essentially the same manner as the forehearth 40 illustrated in Fig. 1. The apparatus further includes a melter 120 and delivery equipment 130. The melter 120 is constructed in essentially the same manner as the melter 20 illustrated in Fig. 1. The delivery equipment 130 has been configured such that it receives molten glass material from the melter 120 and transports the molten material to the two forehearths 140a and 140b.

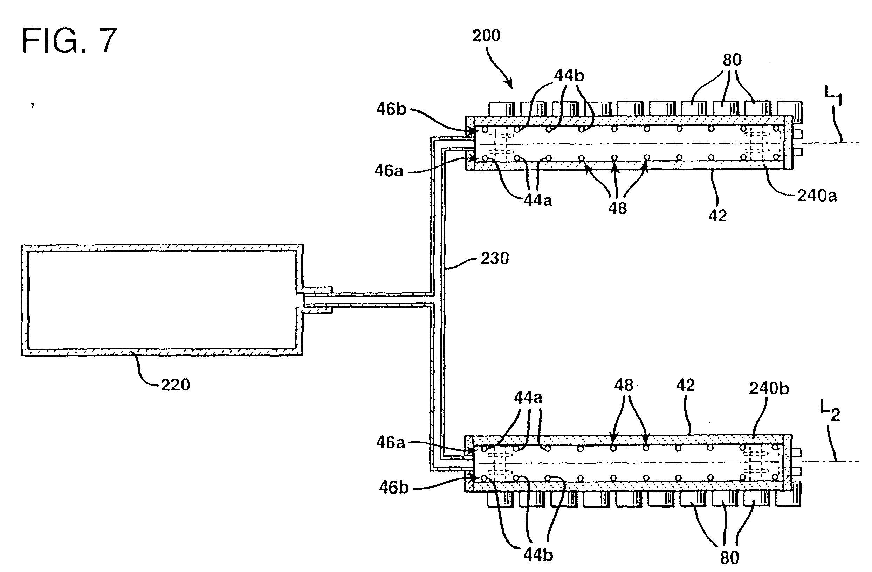

An apparatus 200 formed in accordance with a third embodiment of the present invention is shown in Fig. 7, wherein like reference numerals indicate like elements. In this embodiment, the apparatus 200 includes two forehearths 240a and 240b having longitudinal axes L₁ and L₂ which are parallel to and spaced apart from one another. Each of the two forehearths 240a and 240b is constructed in essentially the same manner as the forehearth 40 illustrated in Fig. 1. The apparatus 200 further includes a melter 220 and delivery equipment 230. The melter 220 is constructed in essentially the same manner as the melter 20 illustrated in Fig. 1. The delivery equipment 230 has been modified such that it receives molten glass material from the melter 220 and transports the molten material to the two forehearths 240a and 240b.

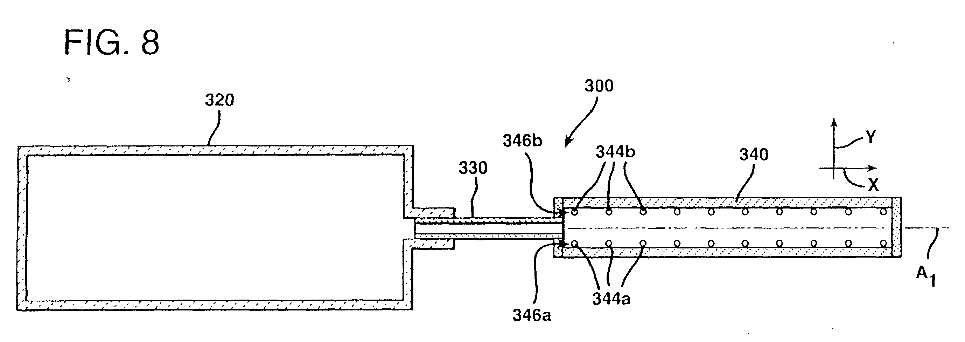

An apparatus 300 formed in accordance with a fourth embodiment of the present invention is shown in Fig. 8, wherein like reference numerals indicate like elements. The apparatus 300 includes a forehearth 340 having first and second openings 344a and 344b through which streams of molten glass material pass. The first openings 344a define a first column 346a of openings and the second openings 344b define a second column 346b of openings. In the embodiment illustrated in Fig. 8, the two columns 346a and 346b are substantially offset from a centrally located longitudinal axis A_{L} of the forehearth 340. Alternatively, the two columns 346a and 346b can be only slightly offset from, i.e., located closer to, the centrally located longitudinal axis A_{L} of the forehearth 340. The second openings 344b are staggered relative to the first openings 344a. The spacing between adjacent openings 344a and 344b along X and Y axes may be constant or can vary. The spacing between adjacent openings 344a and 344b is generally uniform in the forehearth illustrated in Fig. 8. A conventional spinner (not shown), commonly known as a centrifuge or a fiberizer, may be aligned with each of the openings 344a and 344b and secured to the forehearth in a conventional manner. Each spinner receives a stream of molten glass material flowing through its corresponding opening 344a or 344b. The molten glass flows across the bottom wall of the spinner to the spinner peripheral wall and passes in a molten state through orifices in the spinner peripheral wall to create primary fibers. Thereafter, the primary fibers are further attenuated into a veil of secondary fibers of smaller diameter by downwardly flowing hot gases emitted from a burner (not shown). A binder may be applied to the secondary fibers by one or more conventional binder applicators (not shown). The fibers may then be collected on a conveyor (not shown) and passed through a curing oven (not shown). Disclosures of conventional fiber forming processes involving use of spinners are set out in U.S. Patent Nos. 4,734,996 and 4,737,178, the disclosures of which are incorporated herein by reference. Glass fibers formed in this manner are useful in a variety of applications including acoustical and thermal insulation products. The apparatus 300 further includes a melter 320 and delivery equipment 330. The melter 320 is constructed in essentially the same manner as the melter 20 illustrated in Fig. 1. The delivery equipment 330 is constructed in essentially the same manner as the delivery equipment 30 in Fig. 1.

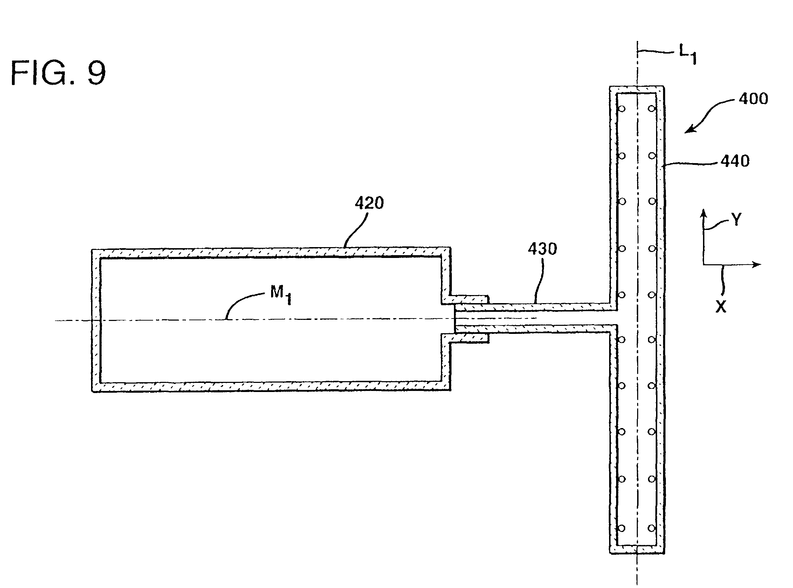

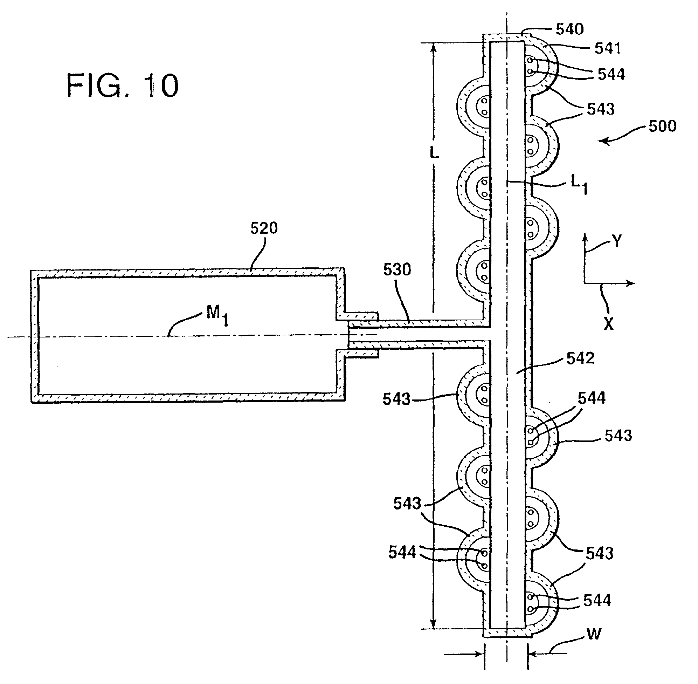

An apparatus 400 formed in accordance with a fifth embodiment of the present invention is shown in Fig. 9, wherein like reference numerals indicate like elements. In this embodiment, the apparatus 400 includes a forehearth 440 having a longitudinal axis L₁. The forehearth 440 is constructed in essentially the same manner as the forehearth 40 illustrated in Fig. 1. The apparatus 400 further includes a melter 420 and delivery equipment 430. The melter 420 is constructed in essentially the same manner as the melter 20 illustrated in Fig. 1. It has a longitudinal axis M₁ which extends generally transversely to the longitudinal axis L₁ of the forehearth 440. The delivery equipment 430 has been configured such that it receives molten glass material from the melter 420 and transports the molten material to the forehearth 440. An apparatus 500 formed in accordance with a sixth embodiment of the present invention is shown in Fig. 10, wherein like reference numerals indicate like elements. In this embodiment, the apparatus 500 includes a forehearth 540, a melter 520 and delivery equipment 530. The melter 520 is constructed in essentially the same manner as the melter 20 illustrated in Fig. 1. It has a longitudinal axis M₁ which extends generally transversely to a longitudinal axis L₁ of the forehearth 540. The delivery equipment 530 has been configured such that it receives molten glass material from the melter 520 and transports the molten material to the forehearth 540.

The forehearth 540 comprises a receptacle 541 having a length L, a width W and a height. The receptacle 541 includes a central portion 542 and a plurality of semicircular breakouts 543 extending out from opposing sides of the central portion 542. Each breakout 543 includes a pair of openings 544 extending completely through it. As is apparent from Fig. 10, the openings 544 are arranged in a pair of columns extending along the length of the receptacle 541. The two columns are spaced a given distance from one another along the width W of the receptacle 541. A separate bushing 50 is aligned with each of the openings 544. The bushings 50 are secured to the underside of the forehearth 540 in a conventional manner.

A conventional burner (not shown) or an electric heating device and a conventional thermocouple are provided for each breakout 543. The thermocouple extends into the molten glass flowing into the breakout 543. The burner or electric heating device is located within the breakout 543 so that, upon being activated, it heats the glass in the breakout 543. The burner is activated by a conventional controller or the like when the temperature of the glass within the breakout 543, as sensed by the thermocouple, falls below a predetermined level.

Each breakout 543 thermally isolates its two bushings 50 from events occurring upstream or downstream from the breakout 543 such that the temperature of the molten glass flowing through the openings 544 in the breakout 543 remains substantially constant. If the temperature of the molten glass received by a bushing 50 varies over time, the fiber forming process can be adversely impacted. For example, if the temperature of the glass decreases sufficiently, a fiber breakout can be induced resulting in a shut-down of the fiber forming process.

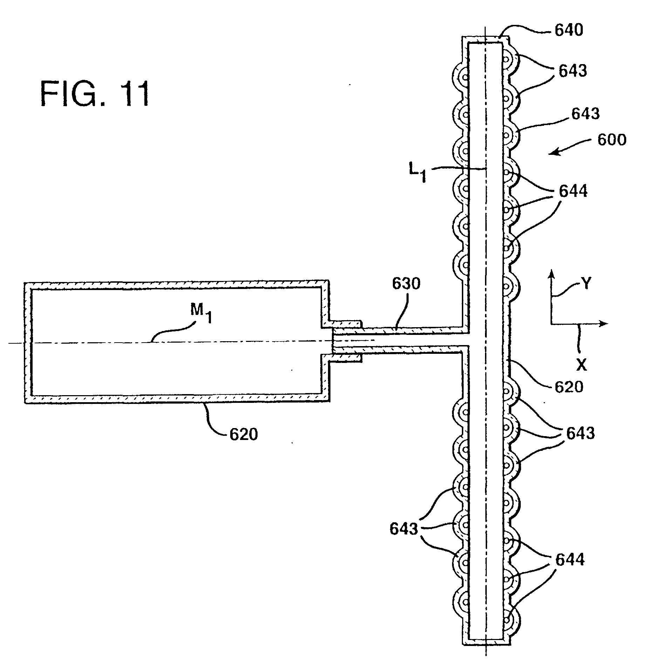

An apparatus 600 formed in accordance with a seventh embodiment of the present invention is shown in Fig. 11, wherein like reference numerals indicate like elements. In this embodiment, the apparatus 600 includes a forehearth 640, a melter 620 and delivery equipment 630. The forehearth 640 is constructed in essentially the same manner as the forehearth 540 illustrated in Fig. 10, except that each breakout 643 is provided with only a single opening 644. A bushing 50 is provided below each forehearth opening 644. The melter 620 is constructed in essentially the same manner as the melter 20 illustrated in Fig. 1. It has a longitudinal axis M₁ which extends generally transversely to a longitudinal axis L₁ of the forehearth 640. The delivery equipment 630 has been configured such that it receives molten glass material from the melter 620 and transports the molten material to the forehearth 640.

It is further contemplated that spinners instead of bushings may be used in the forehearth embodiments illustrated in Figs. 1, 2, 4-7 and 9-11 and bushings rather than spinners may be used in the forehearth embodiment of Fig. 8.

It is also contemplated that the forehearths of the present application may be used in any process requiring molten glass delivery systems including bottle and light bulb making processes.

## Claims

1. Apparatus for forming continuous fibers (70) comprising:
a receptacle (40) having a length (L), a width (W) and a height, the receptacle including two or more columns (46a,46b) of openings (44a,44b) spaced a given distance from one another with each of the columns (46a,46b) including at least two openings (44a,44b) through which primary streams of molten glass material flow from the receptacle, the openings comprising first and second openings (44a,44b) and the columns comprising first and second columns (46a,46b) positioned along first and second axes (A₁,A₂), one of the first openings (44a) sharing a common axis (A₃) with one of the second openings (44b), and the common axis (A₃) being generally transverse to one of the first and second axes (A₁,A₂);
a plurality of bushings (50) located adjacent to the receptacle (40) such that each bushing receives one of the primary streams of molten glass material, and the bushings (50) including a plurality of nozzles for supplying secondary streams of molten glass material to be drawn into continuous fibers (70); and
a single drawing device (80) positioned below the one first opening (44a) and the one second opening (44b) for drawing secondary streams of molten glass supplied by two of the bushings (50) receiving molten glass respectively from the one first opening (44a) and the one second opening (44b) into continuous fibers (70).

2. Apparatus according to claim 1, wherein the first openings (44a) are located in the first column (46a) and the second openings (44b) are located in the second column (46b), and the first column (46a) is substantially parallel to the second column (46b).

3. Apparatus according to claim 1 or claim 2, wherein the common axis (A₃) is generally transverse to the first and second longitudinal axes (A₁,A₂).

4. Apparatus according to any one of claims 1 to 3, wherein the openings (44a,44b) are positioned so as to define a plurality of transverse rows (48) of openings.

5. Apparatus according to claim 4, wherein each of the transverse rows (48) includes at least two openings.

6. Apparatus according to any one of claims 1 to 5, wherein the drawing device comprises a winder (80) having a rotatable collet (82) with an axis (C_{L}) which is substantially parallel to the common axis (A₃).

7. Apparatus according to claim 6, wherein the winder device further comprises a pair of removable sleeves (84) for receiving the continuous fibers (70).

8. Apparatus (10) for drawing streams of molten glass into continuous glass fibers (70), comprising:
a melter (20) for providing a main stream of molten glass material;
delivery equipment (30) for receiving the main stream of molten glass material from the melter (20) and transporting the stream to a receiving station;
a forehearth (40) which defines the receiving station for receiving the main stream from the delivery equipment and comprising apparatus according to any one of claims 1 to 7.
